# EUROPEAN PATENT APPLICATION

(11) **EP 4 654 534 A1**
(43) Date of publication of application: **26.11.2025**
(21) Application number: 24762939.7
(22) Date of filing: 30.01.2024
(51) Int. Cl.: H04L 12/46

(54) **PACKET TRANSMISSION METHOD AND APPARATUS FOR EVPN, DEVICE, AND MEDIUM**

(30) Priority: 28.02.2023 CN 202310223590
(71) Applicant: ZTE CORPORATION, Shenzhen, Guangdong 518057 (CN)
(72) Inventor: ZHOU, Taoran, Shenzhen, Guangdong 518057 (CN); WU, Haisheng, Shenzhen, Guangdong 518057 (CN); ZHU, Haidong, Shenzhen, Guangdong 518057 (CN); HU, Longbin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/074688
(87) International publication number: WO 2024/179256

(57) **Abstract**

The present application provides a packet transmission method and apparatus for EVPN, a device, and a medium. The method is applied to a routing device and includes: obtaining (S102) at least one piece of flow specification network layer reachability information (Flowspec NLRI), wherein each Flowspec NLRI contains a matching field and a flow control action field specifically configured for an EVPN type flow; matching (S104), after receiving a target packet, the target packet with the matching field of the EVPN type traffic corresponding to the at least one piece of Flowspec NLRI, and determining target Flowspec NLRI; and determining (S106), on the basis of a traffic control action field corresponding to the target Flowspec NLRI, a target port corresponding to the target packet, and sending the target packet through the target port.

## Description

### CROSS-REFERENCE TO RELATED APPLICATIONS

The present application claims priority to Chinese patent application No. 202310223590.3 filed on February 28, 2023 to the China Patent Office, and entitled "PACKET TRANSMISSION METHOD AND APPARATUS FOR EVPN, DEVICE, AND MEDIUM", the entire content of which is incorporated herein by reference.

### TECHNICAL FIELD

The present application relates to the technical field of communications, in particular to a packet transmission method and apparatus for EVPN, a device, and a medium.

### BACKGROUND

An Ethernet virtual private network (EVPN) is developed on the basis of a traditional layer-2 virtual private network (VPN). The EVPN subverts an original process of learning a media access control (MAC) address at a forwarding plane, and may learn MAC address information at a control plane on the basis of a multi-protocol extended border gateway protocol (BGP).

A flow specification (Flowspec) technology is an extension of the BGP for network layer reachability information (NLRI), which may realize a control on a device traffic policy through message passing of the BGP.

With development of the forwarding plane and the control plane of the network, the EVPN will be more widely applied in the future. However, at present, a Flowspec does not have an ability to identify EVPN type traffic, and it is not possible to realize a device-side traffic control for an EVPN packet through the FlowspecNLRI.

### SUMMARY

An objective of the present application is to provide a packet transmission method and apparatus for EVPN, a device, and a medium, which can realize a device-side traffic control for the EVPN packet through FlowspecNLRI.

To achieve the above objective, embodiments of the present specification are realized in this way.

In a first aspect, a method for controlling traffic for an Ethernet virtual private network (EVPN) is provided, including: obtaining at least one piece of flow specification network layer reachability information (Flowspec NLRI), wherein each piece of Flowspec NLRI contains a match field and a traffic control action field specifically configured for EVPN type traffic; matching, after receiving a target packet, the target packet with the match field for the EVPN type traffic corresponding to the at least one piece of Flowspec NLRI, and determining target Flowspec NLRI; and determining, on the basis of a traffic control action field corresponding to the target Flowspec NLRI, a target port corresponding to the target packet, and sending the target packet through the target port.

In a second aspect, an electronic device is provided, including: a processor; and a memory configured to store a computer executable instruction. The executable instruction, when executed, causes the processor to perform the method described in the first aspect.

In a third aspect, a computer-readable storage medium is provided. The computer-readable storage medium is configured to store a computer executable instruction. The computer executable instruction, when executed by a processor, implements the method described in the first aspect.

### BRIEF DESCRIPTION OF DRAWING(S)

In order to explain technical solutions in embodiments of the present application or the prior art more clearly, accompanying drawings that need to be used in descriptions of the embodiments or the prior art will be briefly introduced below. Apparently, the accompanying drawings in the following descriptions are only some embodiments recorded in the embodiments of the present application, and those of ordinary skill in the art may further obtain other accompanying drawings from these accompanying drawings without creative work.
FIG. 1 is a schematic flowchart of a method for controlling traffic for an EVPN of an embodiment of the present application.
FIG. 2 is a schematic structural diagram of Flowspec NLRI of an embodiment of the present application.
FIG. 3 is a schematic diagram of a first application scenario for a method for controlling traffic for an EVPN of an embodiment of the present application.
FIG. 4 is a schematic diagram of a second application scenario for a method for controlling traffic for an EVPN of an embodiment of the present application.
FIG. 5 is a schematic diagram of a third application scenario for a method for controlling traffic for an EVPN of an embodiment of the present application.
FIG. 6 is a schematic diagram of a fourth application scenario for a method for controlling traffic for an EVPN of an embodiment of the present application.
FIG. 7 is a schematic structural diagram of an apparatus for controlling traffic for an EVPN of an embodiment of the present application.
FIG. 8 is a schematic structural diagram of an electronic device of an embodiment of the present application.

### DETAILED DESCRIPTION

In order to enable those in the technical field to better understand technical solutions in the present specification, the following will clearly and completely describe the technical solutions in embodiments of the present application in conjunction with accompanying drawings in the embodiments of the present application. Apparently, the described embodiments are only part of the embodiments of the present specification, rather than all the embodiments. Based on the embodiments in the present specification, all other embodiments obtained by those of ordinary skill in the art without creative work shall fall within the scope of protection of the present specification.

A Flowspec technology is an extension of a BGP for NLRI, which may pass a message through the BGP to control traffic on a device side. That is, a device performs a corresponding flow control on a packet on its inbound port according to Flowspec NLRI received from a far end.

Currently, a Flowspec designs a traffic match and a traffic action in the Flowspec NLRI for inbound IP traffic on Global or VPN ports to accurately identify traffic on the device side and perform a forwarding action respectively.

After the packet enters the inbound port of the device, the device matches the packet with the traffic match in the Flowspec NLRI. If the packet hits all match items of the traffic match, a traffic forwarding action is performed according to the traffic action corresponding to the traffic match. If the packet fails to hit all the match items of the traffic match, the traffic forwarding action is performed according to a pre-configured forwarding table.

With development of a forwarding plane and a control plane of a network, an EVPN will be more widely applied. However, the current Flowspec does not have an ability to identify EVPN type traffic, so it is not possible to realize a device-side traffic control for an EVPN packet through the FlowspecNLRI, which makes an application scenario for the Flowspec technology in the future greatly limited.

To this end, the present application aims to provide a packet transmission method for an EVPN, which can realize a device-side traffic control for the EVPN packet through FlowspecNLRI.

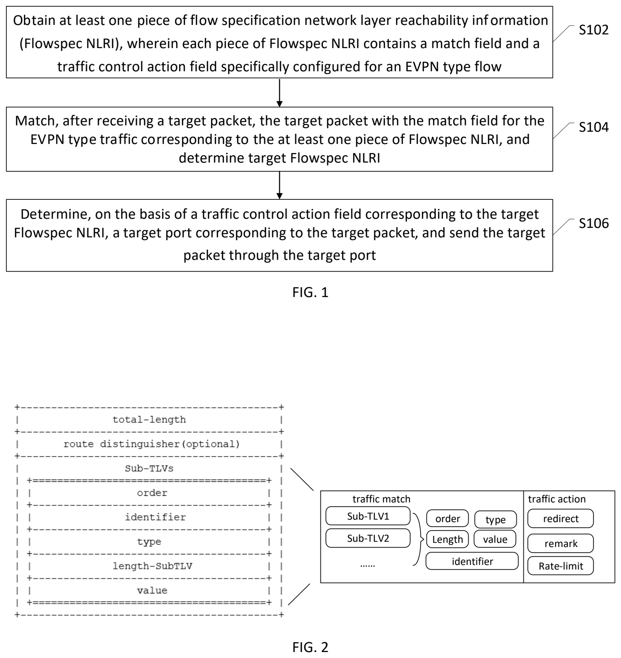

Specifically, with reference to FIG. 1, an embodiment of the present application provides a method for controlling traffic for an Ethernet virtual private network, including the following steps.

S102: at least one piece of flow specification network layer reachability information (Flowspec NLRI) is obtained. Each piece of Flowspec NLRI contains a match field and a traffic control action field specifically configured for EVPN type traffic.

In the embodiment of the present application, the Flowspec NLRI may be sent to a routing device by a Flowspec server. A match field for the EVPN type traffic in the Flowspec NLRI is the traffic match as introduced above. A traffic control action field for the EVPN type traffic in the Flowspec NLRI is the traffic action as introduced above.

It needs to be noted that the NLRI of a BGP is usually configured with two attributes, which are MP_REACH_NLRI and MP_UNREACH_NLRI respectively. The two attributes each contain an address family (AFI) and a sub-address family (SAFI). The address family is a configuration module of a network layer protocol, which may categorize and configure different types of networks. The BGP may configure networks running on different network layer protocols by setting address families and sub-address families, which facilitates management of different network types.

In an original technical implementation, the NLRI only specifically defines address family types for IPv4, IPv6, VPNv4, and VPNv6. To this end, a solution of the embodiment of the present application further requires an introduction of address family settings for the EVPN type traffic on the side of the routing device.

Here, each type of traffic is labeled with Traffic Typeldentifier. An AFI/SAFI configuration corresponding to each type of traffic in the embodiment of the present application is shown in the following table.

| Traffic Typeldentifier | AFI | SAFI |
|---|---|---|
| L2 | 6 | 133 |
| L2VPN | 25 | 134 |
| L3 (IPv4) | 1 | 133 |
| L3 (IPv6) | 2 | 133 |
| L3 (VPNv4) | 1 | 134 |
| L3 (VPNv6) | 2 | 134 |
| EVPN | 25 | 70 |

The present application also requires a redesign of the Flowspec NLRI in addition to a pre-configuration of the address family for the EVPN type traffic in the border gateway protocol of the routing device.

As one of feasible solutions, the present application adopts a TLV manner to encapsulate the traffic match.

A TLV is "Type-Length-Value". Type indicates the type of information carried in this structure. Value indicates the information carried in the TLV. Length indicates an effective byte length of the "Value" field. The TLV is of a nested structure. The nested TLV is called sub-TLV. In the present application, each sub-TLV may represent one traffic match. Correspondingly, an implementation of FlowspecNLRI is shown in FIG. 2 and includes all the following fields.
1) total-length: a field length including all sub-TLVs.
2) route distinguisher: a newly added option for VPN identification.
3) order: a global order of match items in the Flowspec.
4) identifier: an identifier of a match item.
5) type: identifying NRLI in a TLV format.
6) length-Sub-TLV: a length of a value part of the sub-TLV.
7) value: a value contained in the sub-TLV.

The above type field, i.e., the "Type" in the "Type-Length-Value", is used in the embodiment of the present application to represent all supported types of traffic, including L2 type traffic, L3 type traffic, MPLS type traffic, SRv6 type traffic, and EVPN type traffic. Correspondingly, the type field is designed as: - 0 - reserved field; - 1 - L2 (Ether or VPN) traffic match; - 2 - L3 (IP or VPN) traffic match; - 3 - MPLS traffic match; - 4 - reserved for SRv6; and - 5 - EVPN traffic match.

In the Flowspec NLRI of the embodiment of the present application, a plurality of traffic matches (sub-TLVs) may be contained through a plurality of components, while a traffic action is carried through a group attribute.

It needs to be noted that the above is a package design for the FlowspecNLRI. Compared to the types of traffic already supported in the NLRI, the EVPN type traffic transmitted through multi-protocol label switching (MPLS) has particularity in a forwarding mechanism. That is, a source MAC address and a destination MAC on the basis of a forwarding device are encapsulated in an outermost layer of a packet during an encapsulation process of an inner-layer original packet, resulting in the packet having both inner and outer layers of MAC address information.

To this end, an exclusive design is also required for the traffic match and the traffic action for the EVPN type traffic.

The traffic match for the EVPN type traffic may contain the following match fields.
1) EVPN label.
   In an MPLS-EVPN scenario, after an EVPN iteration, the EVPN label is carried in the forwarded packet as identification of an EVPN broadcast domain. Therefore, this field is set as an option for being matched with the packet for the EVPN type traffic.
2) Outer source MAC.
3) Outer destination MAC.
4) Inner source MAC.
5) Inner destination MAC.

In addition, the traffic action for the EVPN type traffic still retains three traditional functions described below.
1) Redirect, a forwarding table may be ignored, and a new next hop is selected as a port specified in the NLRI.
2) Remark, then a DSCP value in the packet may be rewritten.
(3) Rate-limit, an upper limit of a traffic rate, a size of data content, etc. may be defined.

For the above traffic actions for the EVPN type traffic, the present application only extends the redirect therein, which has the following traffic control actions after the extension.

### 1) Redirect to EVPN instance

The redirect to EVPN instance is used to associatively introduce the packet to a specified EVPN instance. It may be seen that the redirect to EVPN instance directly specifies the EVPN instance applied to the packet on an inbound port of the routing device.

### 2) Redirect to EVPN tunnel

The redirect to EVPN tunnel is used to associatively introduce the packet to a specified multi-protocol label switching (MPLS) tunnel or a segment routing traffic engineering (SR-TE) tunnel, wherein the MPLS tunnel or the SR-TE tunnel is mapped with an EVPN instance. It may be seen that the redirect to EVPN tunnel is equivalent to associating the packet on the inbound port of the routing device to a certain specific MPLS tunnel or SR-TE tunnel to introduce the packet to a specific EVPN instance.

### 3) EVPN label action

The EVPN label action is used to switch the EVPN instance for the packet.

Specifically, the EVPN label action is set with pop, swap, insert, and other actions as shown in a following table to realize switching of the EVPN instance when traffic is forwarded.

| Action type | Action function |
|---|---|
| pop | Pop up EVPN label to iterate to public network forwarding |
| swap | Swap EVPN label, and iterate into another EVPN instance |
| insert | Insert EVPN label, and iterate into EVPN forwarding |

It should be understood that the above extended traffic action actions are intended to associate a target packet with one specific EVPN instance. The EVPN instance contains a specific traffic control policy that specifies a port configured to send the packet. For the routing device, the EVPN packet may be sent according to the port applied to the EVPN instance that is finally matched successfully.

The above is an introduction to the Flowspec NLRI. In a practical application, the routing device, after receiving the Flowspec NLRI, may perform a validity verification on the Flowspec NLR on the basis of a protocol of BGP routing security. If the verification fails, the received Flowspec NLRI may be ignored. As an illustrative introduction, the validity verification of the Flowspec NLRI may be considered from two dimensions of traffic match and traffic action. Firstly, the traffic match must contain a destination prefix of L3. Secondly, if the traffic action contains a redirect IP, it is required that a redirect destination address originates from a BGP router published by the Flowspec server.

S104: after receiving the target packet, the target packet is matched with the match field for the EVPN type traffic corresponding to the at least one piece of Flowspec NLRI, and target Flowspec NLRI is determined.

In the embodiment of the present application, the target packet is a packet to be forwarded received by the routing device.

After receiving the target packet, the routing device needs to match the traffic match for the EVPN type traffic in the at least one piece of Flowspec NLRI with at least one target match item contained in the target packet.

As mentioned earlier, the traffic match for the EVPN type traffic contains match items such as EVPN label, Outer Source MAC, Outer Destination MAC, Inner Source MAC, and Inner Destination MAC. In the present application, as long as at least one target match item in the target packet is matched with one of the match items for the EVPN type traffic, the Flowspec NLRI of the traffic match to which the match item belongs may be determined as the target Flowspec NLRI.

In the practical application, the target packet may contain a plurality of target match items belonging to the EVPN type traffic, and there is a possibility of successful matching with traffic matches in a plurality of pieces of Flowspec NLRI. If the target packet is successfully matched with traffic matches in a plurality of pieces of Flowspec NLRI, a unique EVPN instance cannot be mapped through a unique traffic action.

In order to avoid the above case, match priorities of all target match items in the target packet may be determined first on the basis of a pre-configured first match rule. After that, one target match item is selected sequentially in an order of match priorities from high to low in the first match rule, and is matched with the traffic matches for the EVPN type traffic in all Flowspec NLRI. During a matching process, as long as the currently selected target match item is matched with the traffic match for the EVPN type traffic in one piece of the Flowspec NLRI, this one piece of the Flowspec NLRI may be determined as the target Flowspec NLRI, and matching may be ended.

Specifically, the embodiment of the present application may set the following in the first match rule according to actual service requirements: a match priority of the EVPN label is higher than a match priority of the Outer Destination MAC, a match priority of the Outer Destination MAC is higher than a match priority of the Outer Source MAC, a match priority of the Outer Source MAC is higher than a match priority of the Inner Destination MAC, and a match priority of the Inner Destination MAC is higher than a match priority of the Inner Source MAC.

During the process of matching the target packet with the target Flowspec NLRI, the EVPN label in the target packet is first matched with the EVPN label of the EVPN type traffic in each piece of Flowspec NLRI. If the EVPN label in the target packet is inconsistent with the EVPN label in all the Flowspec NLRI, it means that matching fails. Then the Outer Destination MAC in the target packet is matched with the Outer Source MAC for the EVPN type traffic in each piece of Flowspec NLRI. Similarly, if the Outer Destination MAC in the target packet is inconsistent with the Outer Source MACI in all the Flowspec NLRI, it means that matching fails. Then the Outer Source MAC in the target packet is matched with the Outer Destination MAC for the EVPN type traffic in each piece of Flowspec NLRI... until the target Flowspec NLRI matched with the target packet is determined.

In addition, it further needs to be noted that in the practical application, the target packet may belong to any type of traffic of the L2, L3, MPLS, SRv6, and EVPN introduced above. That is, the Flowspec NLRI also contains traffic matches and traffic actions for at least one of the L2, L3, MPLS, and SRv6 in addition to the traffic match and traffic action for the EVPN type traffic.

For the routing device, different match priorities may be configured for different types of traffic, and a type of traffic may be selected sequentially according to the match priorities to be matched with the target packet until the type of traffic to which the target packet belongs is determined from among the above several types of traffic.

Specifically, types of traffic in all the Flowspec NLRI that correspond to match rules and traffic control action fields are defined as target type traffic here. After receiving the target packet, the routing device first determines, according to the type field of each piece of Flowspec NLRI, all supported target type traffic, i.e., types of traffic having traffic matches and traffic actions. Next, the match priorities of all the target type traffic are determined on the basis of a pre-configured second match rule. After that, one piece of target type traffic is selected sequentially in an order of match priorities from high to low in the second match rule to match the target packet with traffic matches for the selected target type traffic corresponding to all the Flowspec NLRI.

Specifically, the embodiment of the present application may set the following in the second match rule according to actual service requirements: a match priority of the L2 type traffic is higher than a match priority of the L3 type traffic, a match priority of the L3 type traffic is higher than a match priority of the MPLS type traffic, a match priority of the MPLS type traffic is higher than a match priority of the SRv6 type traffic, and a match priority of the SRv6 type traffic is higher than a match priority of a match priority of the EVPN type traffic. For this step, after match fields of all other target type traffic with higher match priorities than the EVPN type traffic fail to be matched with the target packet, then matching the target packet with the match field for the EVPN type traffic corresponding to at least one piece of Flowspec NLRI is started.

S106: on the basis of a traffic control action field corresponding to the target Flowspec NLRI, a target port corresponding to the target packet is determined, and the target packet is sent through the target port.

Specifically, on the basis of the traffic control action field corresponding to the target Flowspec NLRI, this step determines a target traffic control action applied to the target packet, i.e., one of the redirect to EVPN instance, redirect to EVPN tunnel, and EVPN label action introduced earlier. After that, on the basis of the target traffic control action, a corresponding target EVPN instance is determined, and a port configured to send the packet in the target EVPN instance is used as the target port corresponding to the target packet, so as to send the target packet through the target port.

On the basis of the foregoing, it may be seen that the method of the embodiment of the present application designs the match field and the traffic control action field specific to the EVPN in the Flowpsec NLRI, which may support the routing device in identifying EVPN-encapsulated traffic, and similarly support a forwarding policy of the routing device for the EVPN type packet. That is, after receiving the target packet to be forwarded, the routing device may try to identify whether the target packet belongs to the EVPN type traffic according to the match field for the EVPN type traffic provided by the Flowspec NLRI. If the target packet belongs to the EVPN type traffic, then traffic control is further performed on the target packet according to the traffic control action field corresponding to the EVPN type traffic. That is, the target port corresponding to the target packet is determined, and the target port is selected to send the target packet, so as to solve the problem that the current Flowspec technology is unable to realize a device-side traffic control on the EVPN packet.

The following is a detailed description of a traffic control of an embodiment of the present application in conjunction with an actual application scenario.

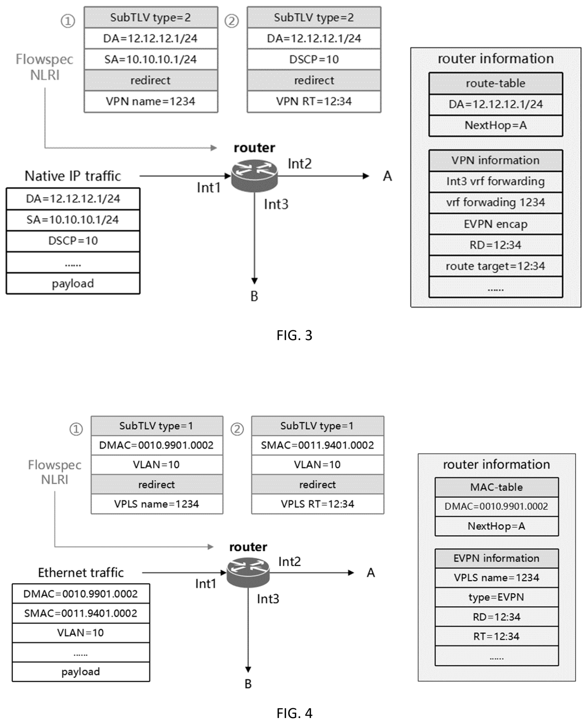

As shown in FIG. 3, in an application scenario of an embodiment of the present application:
Router information of a routing device indicates: a forwarding nexthop for traffic with a destination address (DA) of 12.12.12.1/24 in information of a public network forwarding table of the device is a direct connection address A; and it is assumed that a direct connection address B belongs to a VPN router, a VRF instance corresponding to vrf forwading is 1234, an encapsulation mode is an EVPN encapsulation type, a VPN corresponds to RD=12:34, RT=12:34, and the rest of information is omitted.

An inbound port of the routing device receives a traffic indication of a native IP address: the inbound port of the routing device receives a packet with a destination address (DA) of 12.12.12.1/24, a source address (SA) of 10.10.10.1/24, and a DSCP value of 10.

In Flowspec NLRI ①, a far-end Flowspec server sends information to the routing device, wherein a traffic match contains information Sub-TLV type=2, an option selects to be matched with the destination address (DA)=12.12.12.1/24, and the source address (SA)=10.10.10.1/24. The traffic action is selected as redirect, and redirect is set to a name 1234 of a VPN instance.

In Flowspec NLRI ②, a far-end Flowspec server sends information to the routing device, wherein a traffic match contains information Sub-TLV type=2, an option selects to be matched with the destination address (DA)=12.12.12.1/24, and the DSCP=10. The traffic action is selected as redirect, and redirect is set to a VPN instance with RT=12:34.

Correspondingly, a flow of the application scenario shown in FIG. 3 includes the following steps.

Step 1: when a Flowspec route is not received, native IP traffic is inbound to a public network port Int1 of the routing device, a nexthop address of a public network forwarding table of the routing device is queried to be A, and then the traffic is outbound from an outbound port Int2 to reach A.

Step 2: the routing device that receives the Flowspec NLRI ① verifies validity of the Flowspec route in the Flowspec NLRI ① and applies it to the inbound port Int1.

Step 3: the inbound port of the routing device receives native IP traffic, applies a Flowspec policy, matches the traffic match, and hits DA=12.12.12.1/24 and SA=10.10.10.1/24, so that the traffic action may be performed. The traffic action performs redirect to an instance with a VPN name 1234. A forwarding plane of the routing device queries the VPN instance and a nexthop of a corresponding outbound port and selects to redirect the traffic to the outbound port Int3 to reach B.

Step 4: the routing device that receives the Flowspec NLRI ② verifies validity of the Flowspec route in the Flowspec NLRI ② and applies it to the inbound port Int1.

Step 5: the inbound port of the routing device receives native IP traffic, applies the Flowspec policy, matches the traffic match, and hits DA=12.12.12.1/24 and DSCP=10, so that the traffic action may be performed. The traffic action performs redirect to an instance with a VPN configuration RT=12:34. The forwarding plane of the routing device queries the VPN instance and a nexthop of the corresponding outbound port and selects to redirect the traffic to the outbound port Int3 to reach B.

As shown in FIG. 4, in an application scenario of an embodiment of the present application:
Router information of a routing device indicates: a forwarding nexthop for traffic with a destination MAC address of 0010.9901.0002 in information of a device lay-two MAC forwarding table is a direct connection address A; the device has a VPLS EVPN instance 1234, whose RD and RT configurations are both 12:34.

An inbound port of the routing device receiving native IP traffic indicates: the inbound port of the routing device receives a packet with a destination MAC address of 0010.9901.0002, a source MAC address of 0011.9401.0002, and a VLAN value of 10.

In Flowspec NLRI ①, a far-end Flowspec server sends information to the routing device, wherein a traffic match contains information Sub-TLV type=1, an option selects to be matched with the destination MAC address of 0010.9901.0002, and VLAN=10. The traffic action is selected as redirect, and redirect is set to a name 1234 of a VPLS EVPN instance.

In Flowspec NLRI ②, the far-end Flowspec server sends information to the routing device, wherein a traffic match contains information Sub-TLV type=1, an option selects to be matched with the source MAC address of 0011.9401.0002, and VLAN=10. The traffic action is selected as redirect, and redirect is set to a VPLS EVPN instance with RT=12:34.

L2 encapsulated traffic sent by the outbound port of the routing device indicates: the Flowspec hits traffic, a redirect action is completed via the routing device, and the traffic is forwarded by an AC outbound port Int3 of the VPLS EVPN instance, and points to a nexthop B.

Correspondingly, a flow of the application scenario shown in FIG. 4 includes the following steps.

Step 1: when a Flowspec route is not received, Layer-2 Ethernet traffic is inbound to the public network port Int1 of the routing device, a native MAC forwarding table or a corresponding layer-2 forwarding instance is queried, forwarding is realized through a VLAN, and then the traffic is outbound from the outbound port Int2 to reach the nexthop A.

Step 2: the routing device that receives the Flowspec NLRI ① verifies validity of the Flowspec route in the Flowspec NLRI ① and applies it to the inbound port Int1.

Step 3: the inbound port of the routing device receives the layer-2 Ethernet traffic, applies a Flowspec policy, matches the traffic match, and hits DMAC=0010.9901.0002 and VLAN=10, so that the traffic action may be performed. The traffic action performs redirect to an instance with a VLPS EVPN name 1234. A forwarding plane of the routing device queries the VPN instance and a nexthop of a corresponding outbound port and selects to redirect the traffic to the outbound port Int3 to reach B. The packet is diverted into VPLS forwarding.

Step 4: the routing device that receives the Flowspec NLRI ② verifies validity of the Flowspec route in the Flowspec NLRI ② and applies it to the inbound port Int1.

Step 5: the inbound port of the routing device receives native IP traffic, applies the Flowspec policy, matches the traffic match, and hits SMAC=0011.9401.0002 and VLAN=10, so that the traffic action may be performed. The traffic action performs redirect to an instance with a VPLS EVPN configuration RT=12:34. The forwarding plane of the routing device queries the VPLS EVPN instance and a nexthop of the corresponding outbound port and selects to redirect the traffic to the outbound port Int3 to reach B. The packet is diverted into VPLS forwarding.

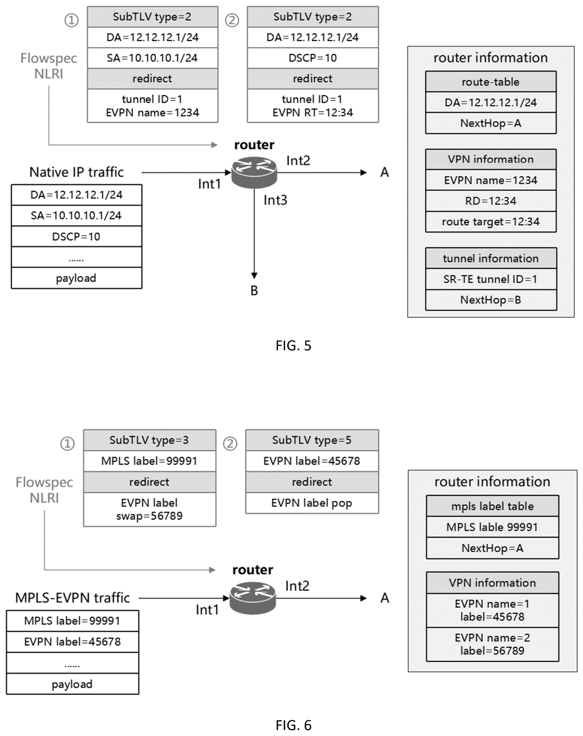

As shown in FIG. 5, in an application scenario of an embodiment of the present application:
Router information of a routing device indicates: a forwarding nexthop for traffic with a destination address of 12.12.12.1/24 in information of a device forwarding table is a direct connection address A; the device has a VPLS EVPN instance 1234, whose RD and RT configurations are both 12:34; and the device is deployed with an SR-TE tunnel, which corresponds to a tunnel ID=1 on the device.

An inbound port of the routing device receiving native IP traffic indicates: the inbound port of the routing device receives a packet with a destination address (DA) of 12.12.12.1/24, a source address (SA) of 10.10.10.1/24, and a DSCP value of 10.

In Flowspec NLRI ①, a far-end Flowspec server sends information to the device, wherein a traffic match contains information Sub-TLV type=2, an option selects to be matched with the destination address of 12.12.12.1/24, and the source address of 10.10.10.1/24. The traffic action is selected as redirect, and redirect is set to a tunnel, wherein tunnel ID=1, and an iteration is performed into a name 1234 of an EVPN instance.

In Flowspec NLRI ②, a far-end Flowspec server sends information to the device, wherein a traffic match contains information Sub-TLV type=2, an option selects to be matched with the destination address of 12.12.12.1/24, and the source address of 10.10.10.1/24. The traffic action is selected as redirect, and redirect is set to a tunnel, wherein tunnel ID=1, and an iteration is performed into EVPN RT=12:34.

MPLS-EVPN encapsulated traffic sent by the outbound port of the routing device indicates: the Flowspec hits the traffic, a redirect action is completed via the device, an outer layer encapsulates DMAC, SMAC, MPLS label, and EVPN label information, which is forwarded by the outbound port Int3 of a tunnel iteration, and points to the nexthop B.

Correspondingly, a flow of the application scenario shown in FIG. 5 includes the following steps.

Step 1: when a Flowspec route is not received, native IP traffic is inbound to a public network port Int1 of a device, a nexthop address of a public network forwarding table of the device is queried to be A, and then the traffic is outbound from an outbound port Int2 to reach A.

Step 2: the routing device that receives the Flowspec NLRI ① verifies validity of the Flowspec route in the Flowspec NLRI ① and applies it to the inbound port Int1.

Step 3: the inbound port of the routing device receives native IP traffic, applies a Flowspec policy, matches a traffic match, and hits DA=12.12.12.1/24 and SA=10.10.10.1/24, so that a traffic action may be performed. The traffic action performs redirect to SR-TE with tunnel ID=1 and iterates into forwarding of a name 1234 of an EVPN instance. A forwarding plane of the routing device queries a VPN instance and a nexthop of a corresponding outbound port and selects to redirect the traffic to the outbound port Int3 to reach B. The packet is diverted into tunnel forwarding.

Step 4: the routing device that receives the Flowspec NLRI ② verifies validity of the Flowspec route in the Flowspec NLRI ② and applies it to the inbound port Int1.

Step 5: the inbound port of the routing device receives native IP traffic, applies the Flowspec policy, matches the traffic match, and hits DA=12.12.12.1/24 and SA=10.10.10.1/24, so that the traffic action may be performed. The traffic action performs redirect to SR-TE with tunnel ID=1 and iterates into forwarding of RT=12:34 of an EVPN instance. The forwarding plane of the device queries a VPN instance and a nexthop of a corresponding outbound port and selects to redirect the traffic to the outbound port Int3 to reach B. The packet is diverted into tunnel forwarding.

As shown in FIG. 6, in an application scenario of an embodiment of the present application:

Router information of a routing device: a forwarding nexthop of traffic with device label forwarding table information MPLS label=99991 is a direct connection address A; the routing device has a VPLS EVPN instance 1, whose forwarding EVPN label=45678; and the device has a VPLS EVPN instance 2, whose forwarding EVPN label=56789.

An inbound port of the routing device receives MPLS-EVPN traffic: the inbound port of the routing device receives a packet with MPLS label=99991 and EVPN label=45678.

In Flowspec NLRI ①, a far-end Flowspec server sends information to the routing device, wherein a traffic match contains information Sub-TLV type=3, and an option selects to be matched with MPLS label of 99991. The traffic action is selected as redirect, a swap action for the EVPN label is set, and EVPN label=56789 is switched.

In Flowspec NLRI ②, the far-end Flowspec server sends information to the routing device, wherein a traffic match contains information Sub-TLV type=5, an option selects to be matched with EVPN label of 45678. The traffic action is selected as redirect, and a pop action for the EVPN label is set.

MPLS-EVPN encapsulated traffic sent by the outbound port of the routing device: the Flowspec hits traffic, a redirect action is completed via the routing device, and the traffic is forwarded by an outbound port Int2 iterated by a label forwarding table, and points to a nexthop A.

Correspondingly, a flow of the application scenario shown in FIG. 6 includes the following steps.

Step 1: when a Flowspec route is not received, MPLS-EVPN traffic is inbound to the public network port Int1 of the routing device, a nexthop address of the label forwarding table of the device is queried to be A, and then the traffic is outbound from an outbound port Int2 to reach A.

Step 2: the routing device that receives the Flowspec NLRI ① verifies validity of the Flowspec route in the Flowspec NLRI ① and applies it to the inbound port Int1.

Step 3: the inbound port of the routing device receives MPLS-EVPN traffic, applies the Flowspec policy, matches the traffic match, and hits MPLS label=99991, so that the traffic action may be performed. The traffic action performs redirect to replace the EVPN label with 56789. The forwarding plane of the routing device queries a nexthop address of the label forwarding table to be A, and then the traffic is outbound from the outbound port Int2 to reach A.

Step 4: the routing device that receives the Flowspec NLRI ② verifies validity of the Flowspec route in the Flowspec NLRI ② and applies it to the inbound port Int1.

Step 5: the inbound port of the routing device receives Native IP traffic, applies the Flowspec policy, matches the traffic match, and hits EVPN label=45678, so that the traffic action may be performed. The traffic action performs redirect to make the EVPN label pop up. The forwarding plane of the routing device queries a nexthop address of the label forwarding table to be A, and then the traffic is outbound from the outbound port Int2 to reach A.

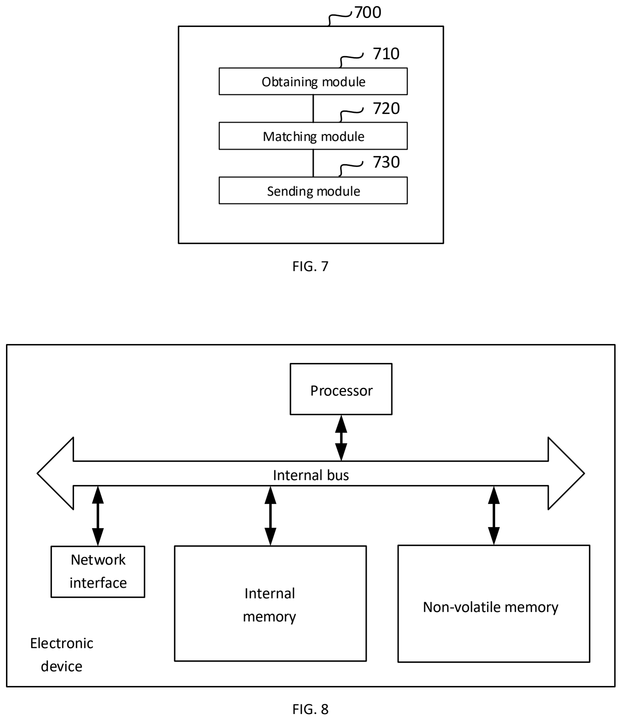

Corresponding to the method shown in FIG. 1 above, an embodiment of the present application further provides an apparatus for controlling traffic for an Ethernet virtual private network (EVPN) that may be applied to a routing device. FIG. 7 is a schematic structural diagram of an apparatus for controlling traffic of an embodiment of the present application, including: an obtaining module 710, configured to obtain at least one piece of flow specification network layer reachability information (Flowspec NLRI), wherein each piece of Flowspec NLRI contains a match field and a traffic control action field specifically configured for EVPN type traffic; a matching module 720, configured to match, after receiving a target packet, the target packet with the match field for the EVPN type traffic corresponding to the at least one piece of Flowspec NLRI, and determine target Flowspec NLRI; and a sending module 730, configured to determine, on the basis of a traffic control action field corresponding to the target Flowspec NLRI, a target port corresponding to the target packet, and send the target packet through the target port.

On the basis of the apparatus of the embodiment of the present application, it may be seen that the embodiment of the present application designs the match field and the traffic control action field specific to the EVPN in the Flowspec NLRI, which may support the routing device in identifying EVPN-encapsulated traffic, and similarly support a forwarding policy of the routing device for the EVPN type packet. That is, after receiving the target packet to be forwarded, the routing device may try to identify whether the target packet belongs to the EVPN type traffic according to the match field for the EVPN type traffic provided by the Flowspec NLRI. If the target packet belongs to the EVPN type traffic, then traffic control is further performed on the target packet according to the traffic control action field corresponding to the EVPN type traffic. That is, the target port corresponding to the target packet is determined, and the target port is selected to send the target packet, so as to solve the problem that the current Flowspec technology is unable to realize a device-side traffic control on the EVPN packet.

Optionally, the sending module 730 determining, on the basis of the traffic control action field corresponding to the target Flowspec NLRI, the target port corresponding to the target packet includes: determining, on the basis of the traffic control action field corresponding to the target Flowspec NLRI, a target traffic control action applied to the target packet; and determining, on the basis of the target traffic control action, a corresponding target EVPN instance, and using a port configured to send a packet in the target EVPN instance as the target port corresponding to the target packet.

Optionally, the target traffic control action includes one of the following: redirect to EVPN instance, used to associatively introduce a packet to a specified EVPN instance; redirect to EVPN tunnel, used to associatively introduce a packet to a specified multi-protocol label switching (MPLS) tunnel or a segment routing traffic engineering (SR-TE) tunnel, wherein the MPLS tunnel or the SR-TE tunnel is mapped with an EVPN instance; and EVPN label action, used to switch an EVPN instance for a packet.

Optionally, the matching module 720 matching the target packet with the match field for the EVPN type traffic provided by the at least one piece of Flowspec NLRI, and determining the target Flowspec NLRI includes: determining, in a case where the target packet contains a target match item corresponding to at least one piece of EVPN type traffic, match priorities of all target match items on the basis of a pre-configured first match rule; selecting one target match item sequentially in an order of match priorities from high to low in the first match rule, and matching the one target match item with match fields in all Flowspec NLRI; and determining, in a case where the one selected target match item is matched with a match field in one piece of the Flowspec NLRI, the one piece of the Flowspec NLRI as the target Flowspec NLRI.

Optionally, the target packet includes at least one of the following match items: EVPN label, Outer Source MAC, Outer Destination MAC, Inner Source MAC, and Inner Destination MAC.

Optionally, in the first match rule, a match priority of the EVPN label is higher than a match priority of the Outer Destination MAC, a match priority of the Outer Destination MAC is higher than a match priority of the Outer Source MAC, a match priority of the Outer Source MAC is higher than a match priority of the Inner Destination MAC, and a match priority of the Inner Destination MAC is higher than a match priority of the Inner Source MAC.

Optionally, the at least one piece of Flowspec NLRI further contains a match field and a traffic control action field of an other type of traffic. The matching module 720 matching, after receiving the target packet, the target packet with the match field for the EVPN type traffic corresponding to the at least one piece of Flowspec NLRI includes: determining, after receiving the target packet, match priorities of all target type traffic on the basis of a pre-configured second match rule, wherein each piece of target type traffic is a type of traffic that corresponds to a match rule and a traffic control action field in the at least one piece of Flowspec NLRI; and selecting one piece of target type traffic sequentially in an order of match priorities from high to low in the second match rule to match the target packet with a match field for the selected target type traffic corresponding to the at least one piece of Flowspec NLRI until match fields of all other target type traffic with higher match priorities than the EVPN type traffic fail to be matched with the target packet, and then matching the target packet with the match field for the EVPN type traffic corresponding to the at least one piece of Flowspec NLRI.

Optionally, the other type of traffic includes at least one of L2 type traffic, L3 type traffic, MPLS type traffic, and SRv6 type traffic. In the second match rule, a match priority of the L2 type traffic is higher than a match priority of the L3 type traffic, a match priority of the L3 type traffic is higher than a match priority of the MPLS type traffic, a match priority of the MPLS type traffic is higher than a match priority of the SRv6 type traffic, and a match priority of the SRv6 type traffic is higher than a match priority of a match priority of the EVPN type traffic.

Optionally, the at least one piece of Flowspec NLRI includes a type field, the type field is used to indicate that the Flowspec NLRI to which the same belongs contains a type of traffic with a match field and a traffic control action field. The matching module 720 further determines, before determining the match priorities of all the target type traffic on the basis of the pre-configured second match rule, all the target type traffic on the basis of the type field of the at least one piece of Flowspec NLRI.

Optionally, an address family of the EVPN type traffic is pre-configured in a border gateway protocol of the routing device.

Obviously, the apparatus shown in FIG. 7 may be used as an execution body of the method shown in FIG. 1, and therefore may implement the steps and corresponding functions of the method shown in FIG. 1. Since the principle is the same, it will not be specifically discussed herein.

In addition, an embodiment of the present application further provides an electronic device. FIG. 8 is a schematic structural diagram of an electronic device of an embodiment of the present application. Please refer to FIG. 8, at a hardware level, the electronic device includes a processor and optionally further includes an internal bus, a network port, and a memory. The memory may contain an internal memory, such as a high-speed random-access memory (RAM), and may further include a non-volatile memory, such as at least one disk memory. Certainly, the electronic device may further include hardware required for other services.

The processor, the network port and the memory may be connected to each other via the internal bus. The internal bus may be an industry standard architecture (ISA) bus, a peripheral component interconnect (PCI) bus, or an extended industry standard architecture (EISA) bus, etc. The bus may be categorized into an address bus, a data bus, a control bus, etc. For ease of representation, the bus is represented by only one bi-directional arrow in FIG. 5, but it does not indicate that there is only one bus or one type of bus.

The memory is configured to store a program. Specifically, the program may include a program code. The program code includes a computer operating instruction. The memory may include an internal memory and a nonvolatile memory and provide an instruction and data to the processor.

The processor reads a corresponding computer program from the non-volatile memory into the internal memory and then runs the same, forming the above packet transmission method as shown in FIG. 5 at a logical level. Correspondingly, the processor executes the program stored in the memory and is specifically configured to perform the following operations: obtaining at least one piece of flow specification network layer reachability information (Flowspec NLRI), where each piece of Flowspec NLRI contains a match field and a traffic control action field specifically configured for EVPN type traffic; matching, after receiving a target packet, the target packet with the match field for the EVPN type traffic corresponding to the at least one piece of Flowspec NLRI, and determining target Flowspec NLRI; and determining, on the basis of a traffic control action field corresponding to the target Flowspec NLRI, a target port corresponding to the target packet, and sending the target packet through the target port.

On the basis of the electronic device of the embodiment of the present application, it may be seen that the embodiment of the present application designs the match field and the traffic control action field specific to the EVPN in the Flowspec NLRI, which may support the routing device in identifying EVPN-encapsulated traffic, and similarly support a forwarding policy of the routing device for the EVPN type packet. That is, after receiving the target packet to be forwarded, the routing device may try to identify whether the target packet belongs to the EVPN type traffic according to the match field for the EVPN type traffic provided by the Flowspec NLRI. If the target packet belongs to the EVPN type traffic, then traffic control is further performed on the target packet according to the traffic control action field corresponding to the EVPN type traffic. That is, the target port corresponding to the target packet is determined, and the target port is selected to send the target packet, so as to solve the problem that the current Flowspec technology is unable to realize a device-side traffic control on the EVPN packet.

The above method for controlling the traffic for the Ethernet virtual private network disclosed by the embodiment shown in the present specification may be applied to the processor or implemented by the processor. The processor may be an integrated circuit chip that has a capability to process signals. During an implementation process, all steps of the above method may be completed by an integrated logic circuit of hardware or instructions in the form of software in the processor. The above processor may be a general-purpose processor, including a central processing unit (CPU), a network processor (NP), etc., and may further be a digital signal processor (DSP), an application specific integrated circuit (ASIC), a field-programmable gate array (FPGA) or other programmable logic devices, a discrete gate or a transistor logic device, or a discrete hardware component. Various methods, steps, and logical block diagrams disclosed in the embodiments of the present application may be realized or performed. The general-purpose processor may be a microprocessor, or the processor may also be any conventional processor, etc. The steps of the method disclosed in conjunction with the embodiments of the present application may be directly embodied to be performed and completed by a hardware decoding processor, or may be performed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory, and completes the steps of the above method in combination with its hardware.

Certainly, in addition to the implementation of software, the electronic device of the present specification does not exclude other implementations, such as a logic device or a combination of software and hardware, etc., which means that a performing subject of the following processing flow is not limited to the individual logic units, but may also be hardware or a logic device.

In addition, an embodiment of the present application further proposes a computer-readable storage medium storing one or more programs, and the one or more programs include instructions.

Optionally, the above instructions, when executed by a portable electronic device including a plurality of applications, can cause the portable electronic device to perform the steps of the method shown in FIG. 1, including: obtaining at least one piece of flow specification network layer reachability information (Flowspec NLRI), where each piece of Flowspec NLRI contains a match field and a traffic control action field specifically configured for EVPN type traffic; matching, after receiving a target packet, the target packet with the match field for the EVPN type traffic corresponding to the at least one piece of Flowspec NLRI, and determining target Flowspec NLRI; and determining, on the basis of a traffic control action field corresponding to the target Flowspec NLRI, a target port corresponding to the target packet, and sending the target packet through the target port.

Those of skill in the art should understand that the embodiments of the present specification may be provided as methods, systems, or computer program products. Therefore, the present specification may take the form of a full hardware embodiment, a full software embodiment, or an embodiment combining software and hardware. Besides, the present specification may adopt the form of a computer program product implemented on one or more computer available storage media (including but not limited to a disk memory, a CD-ROM, an optical memory and the like) containing computer available program codes.

Specific embodiments of the present specification are described above. Other embodiments are within the scope of the appended claims. In some cases, actions or steps recorded in the claims may be executed in an order different from that in the embodiments and still realize desired results. Further, the processes depicted in the accompanying drawings do not necessarily require the specific order or successive order shown to realize the desired results. In some implementations, multitasking and parallel processing may be possible or may be advantageous.

The foregoing is merely embodiments of the present specification and is not intended to limit the present specification. Various changes and variations of the present specification are possible for those of skill in the art. Any modification, equivalent replacement, improvement, etc. made within the spirit and principle of the present specification should be included in the scope of the claims of the present specification. In addition, all other embodiments obtained by those of ordinary skill in the art without making creative work should belong to the scope of protection of the present document.

## Claims

1. A packet transmission method for an Ethernet virtual private network (EVPN), applied to a routing device, comprising:
obtaining at least one piece of flow specification network layer reachability information (Flowspec NLRI), wherein each piece of Flowspec NLRI contains a match field and a traffic control action field specifically configured for EVPN type traffic;
matching, after receiving a target packet, the target packet with the match field for the EVPN type traffic corresponding to the at least one piece of Flowspec NLRI, and determining target Flowspec NLRI; and
determining, on the basis of a traffic control action field corresponding to the target Flowspec NLRI, a target port corresponding to the target packet, and sending the target packet through the target port.

2. The method according to claim 1, wherein
determining, on the basis of a traffic control action field corresponding to the target Flowspec NLRI, a target port corresponding to the target packet comprises:
determining, on the basis of the traffic control action field corresponding to the target Flowspec NLRI, a target traffic control action applied to the target packet; and
determining, on the basis of the target traffic control action, a corresponding target EVPN instance, and using a port configured to send a packet in the target EVPN instance as a target port corresponding to the target packet.

3. The method according to claim 2, wherein
the target traffic control action comprises one of the following:
redirect to EVPN instance, used to associatively introduce a packet to a specified EVPN instance;
redirect to EVPN tunnel, used to associatively introduce a packet to a specified multi-protocol label switching (MPLS) tunnel or a segment routing traffic engineering (SR-TE) tunnel, wherein the MPLS tunnel or the SR-TE tunnel is mapped with an EVPN instance; and
EVPN label action, used to switch an EVPN instance for a packet.

4. The method according to claim 1, wherein
matching the target packet with the match field for the EVPN type traffic provided by the at least one piece of Flowspec NLRI, and determining target Flowspec NLRI comprises:
determining, in a case where the target packet contains a target match item corresponding to at least one piece of EVPN type traffic, match priorities of all target match items on the basis of a pre-configured first match rule;
selecting one target match item sequentially in an order of match priorities from high to low in the first match rule, and matching the one target match item with match fields in all Flowspec NLRI; and
determining, in a case where the one selected target match item is matched with a match field in one piece of the Flowspec NLRI, the one piece of the Flowspec NLRI as target Flowspec NLRI.

5. The method according to claim 4, wherein
the target packet comprises at least one of the following match items:
EVPN label, Outer Source MAC, Outer Destination MAC, Inner Source MAC, and Inner Destination MAC.

6. The method according to claim 5, wherein
in the first match rule, a match priority of the EVPN label is higher than a match priority of the Outer Destination MAC, a match priority of the Outer Destination MAC is higher than a match priority of the Outer Source MAC, a match priority of the Outer Source MAC is higher than a match priority of the Inner Destination MAC, and a match priority of the Inner Destination MAC is higher than a match priority of the Inner Source MAC.

7. The method according to claim 1, wherein
the at least one piece of Flowspec NLRI further contains a match field and a traffic control action field for an other type of traffic; and
matching, after receiving a target packet, the target packet with the match field for the EVPN type traffic corresponding to the at least one piece of Flowspec NLRI comprises:
determining, after receiving a target packet, match priorities of all target type traffic on the basis of a pre-configured second match rule, wherein each piece of target type traffic is a type of traffic that corresponds to a match rule and a traffic control action field in the at least one piece of Flowspec NLRI; and
selecting one piece of target type traffic sequentially in an order of match priorities from high to low in the second match rule to match the target packet with a match field for the selected target type traffic corresponding to the at least one piece of Flowspec NLRI until match fields of all other target type traffic with higher match priorities than the EVPN type traffic fail to be matched with the target packet, and then matching the target packet with the match field for the EVPN type traffic corresponding to the at least one piece of Flowspec NLRI.

8. The method according to claim 7, wherein
the other type of traffic comprises at least one of L2 type traffic, L3 type traffic, MPLS type traffic, and SRv6 type traffic; and in the second match rule, a match priority of the L2 type traffic is higher than a match priority of the L3 type traffic, a match priority of the L3 type traffic is higher than a match priority of the MPLS type traffic, a match priority of the MPLS type traffic is higher than a match priority of the SRv6 type traffic, and a match priority of the SRv6 type traffic is higher than a match priority of a match priority of the EVPN type traffic.

9. The method according to claim 7, wherein
the at least one piece of Flowspec NLRI comprises a type field, the type field is used to indicate that the Flowspec NLRI to which the same belongs contains a type of traffic with a match field and a traffic control action field; and
before determining match priorities of all target type traffic on the basis of a pre-configured second match rule, the method further comprises:
determining all target type traffic on the basis of the type field of the at least one piece of Flowspec NLRI.

10. The method according to any one of claims 1-9, wherein
an address family of the EVPN type traffic is pre-configured in a border gateway protocol of the routing device.

11. An electronic device, comprising:
a processor; and a memory configured to store a computer-executable instruction, wherein the computer-executable instruction, when executed, causes the processor to perform the method according to any one of claims 1-10.

12. A computer-readable storage medium, configured to store a computer-executable instruction, wherein the computer-executable instruction, when executed by a processor, implements the method according to any one of claims 1-10.
